# EUROPÄISCHE PATENTSCHRIFT

(11) **EP 0 828 406 B1**
(45) Veröffentlichungstag und Bekanntmachung des Hinweises auf die Patenterteilung: **13.10.2004**
(21) Anmeldenummer: 96114114.0
(22) Anmeldetag: 04.09.1996
(51) Int. Cl.: H05B 1/02

(54) **Vorrichtung zur Begrenzung und Verteilung der von einem Herd aufgenommenen elektrischen Leistung**
Device for limiting and distributing the electric power used by a cooking hob
Dispositif pour limiter et distribuer la puissance électrique consommée par une cuisinière

(43) Veröffentlichungstag der Anmeldung: 11.03.1998
(73) Patentinhaber: Siebe Appliance Controls GmbH, 78559 Gosheim (DE)
(72) Erfinder: Hillwig,Detlev, 06844 Dessau (DE); Sewerin,Peter, 78601 Mahlstetten (DE); Anders,Klaus, 78559 Gosheim (DE)
(74) Vertreter: Vetter, Hans, Dipl.-Phys. Dr.

(56) Entgegenhaltungen:
- EP-A- 0 576 408
- WO-A-95/29572
- DE-A- 2 906 448
- US-A- 4 313 052

## Beschreibung

Die Erfindung betrifft eine Vorrichtung zur Begrenzung und Verteilung der von einem Herd aufgenommenen elektrischen Leistung, wobei jede Herdplatte und/oder Backofenheizung mit einem Temperaturregelschalter versehen ist, über den das zugeordnete Heizelement bei geschlossenem Bedienungsschalter mit einer Betriebsspannung beaufschlagbar ist.

Bei heutzutage üblichen Herden werden reduzierte Leistungseinstellungen bei den einzelnen Heizelementen der Herdplatten und der Backofenheizung durch Takten des Verbraucherstroms realisiert. Je höher der Leistungswunsch, um so größer das Einschaltverhältnis. Zum Takten sind sogenannte Bimetall-Energieregler vorgesehen, deren Schalttemperatur und in Abhängigkeit davon das Einschaltverhältnis durch Drehknöpfe eingestellt werden kann. In der Ein-Phase wird das Heizelement erhitzt und bei Erreichen der einstellungsabhängigen Temperatur wieder abgeschaltet. Nach einer Abkühlzeit beginnt wieder eine Ein-Phase. Wegen dieser Technik kann es vorkommen, daß bei Einschalten aller Herdplatten, selbst bei kleinsten Leistungsstufen, alle Heizelemente gleichzeitig Strom fordern. In manchen Gebieten und vor allem in älteren Wohnungen und Haushalten sind die elektrischen Wohnungsanschlüsse mit 16 A-Sicherungen abgesichert. übliche Herde mit vier Kochplatten können an einem derartigen Netz nicht betrieben werden, wenn drei oder vier Hochplatten gleichzeitig eingeschaltet werden sollen, selbst in kleinsten Leistungsstufen, da auch dann zumindest kurzfristig ein Strom von über 30 A fließen kann.

Aus der WO 95/29572 A ist eine vollständig elektronische Steuerung der Kochstellen bekannt, wobei ein Steuerrechner die Kochstellen über Relais taktet und die Taktung so berechnet, dass sowohl die Temperatureinstellung, wie auch die Leistungsbegrenzung unter Berücksichtigung gewisser Prioritäten erreicht wird. Eine solche vollständig elektronische Steuerung von Kochstellen mit gleichzeitiger Leistungsbegrenzung eignet sich kosten- und aufwandmäßig nicht für einfachere Herde und ist auch nicht zur Nachrüstung von herkömmlichen Herden geeignet, die mit elektromechanischen Temperaturstellern arbeiten.

Auch aus der EP-A-0 576 408 ist eine derartige vollständig elektronische Steuerung bekannt, bei der eine Mikroprozessoreinheit in Abhängigkeit einer vom Anwender gewünschten Leistungsstufe eine kombinierte Information berechnet, in Abhängigkeit derer die Kochstellen mit direkter oder reduzierter Spannung versorgt werden und das Einschaltverhältnis gesteuert wird. Diese Anordnung entspricht somit grundsätzlich zu dem zuvor beschriebenen Stand der Technik, wobei dieselben Nachteile vorliegen.

Eine Aufgabe der vorliegenden Erfindung besteht darin, Herde, bei denen die Summe der Einzelleistungen der Heizelemente die abgesicherte Leistung übersteigt, dennoch in einfacher Weise problemlos betreiben zu können.

Diese Aufgabe wird erfindungsgemäß dadurch gelöst, dass eine elektronische Steuereinrichtung mit Mitteln zur Erfassung der Schaltstellungen der Temperaturregelschalter sowie steuerseitig nochmals mit in Reihe zu den Heizelementen wenigstens der Herdplatten und den entsprechenden Temperaturschaltern geschalteten Steuerschaltern verbunden ist, wobei durch die Steuerschalter die Zahl der gleichzeitig eingeschalteten Heinzelemente so begrenzt ist, dass die maximal zulässige Gesamtleistung nicht überschritten wird.

Mit der erfindungsgemäßen Vorrichtung werden zwar bei gleichzeitigem Einschalten aller Herdplatten die einzelnen Einschaltzeiten geringfügig reduziert, jedoch verlängern sich dadurch Anheizzeiten und Kochzeiten nur unmerklich. Bei der üblichen Arbeit in der Küche sind keine Einschränkungen bemerkbar. Wenn beispielsweise nur zwei Herdplatten gleichzeitig eingeschaltet werden, tritt die Begrenzung ohnehin nicht im Sinne einer Verkürzung der Anheizzeit in Erscheinung. Bei drei Herdplatten ist der Eingriff noch sehr minimal. In vorteilhafter Weise können dadurch Herde störungsfrei an elektrischen Netzen betrieben werden, die im Hinblick auf die Summe aller Einzelströme der Heizelemente des Herdes weit niedriger abgesichert sind.

Durch die in den Unteransprüchen aufgeführten Maßnehmen sind vorteilhafte Weiterbildungen und Verbesserungen der im Anspruch 1 angegebenen Vorrichtung möglich.

In einer besonders einfachen technischen Ausführung der Erfindung wird durch die elektronische Steuereinrichtung bei Erfassung des öffnungsvorgangs eines Temperaturregelschalters der zugeordnete Steuerschalter ebenfalls geöffnet und ein anderer Steuerschalter, dessen zugeordneter Temperaturregelschalter geschlossen ist, ebenfalls geschlossen. Auf diese Weise wird die maximal zur Verfügung stehende Leistung optimal ohne Unterbrechungen ausgenutzt.

Um bei vielen eingeschalteten Heizelementen eine möglichst gleichmäßige Enerieverteilung zu erreichen, besitzt die elektronische Steuereinrichtung eine Speichereinrichtung zum Speichern wenigstens der letzten Schließvorgänge der Temperaturregelschalter, wobei beim nächsten Steuersignal zum Schließen eines Steuerschalters derjenige berücksichtigt wird, dessen zugeordneter Temperaturregelschalter am längsten geschlossen ist. Dadurch erfolgt eine gleichmäßige Reduzierung der Einschaltdauer aller Heizelemente.

Die Steuerschalter sind zweckmäßigerweise als Relais, Triac oder Thyristoren ausgebildet.

Als Mittel zur Erfassung der Schaltstellungen der Temperaturregelschalter dienen in einfacher und kostengünstiger Weise die elektrische Spannung an diesen Temperaturregelschaltern abgreifende Sensorleitungen. Wegen kritischer Backprozesse soll der Backofen in jedem Falle Vorrang haben. Die Backhofenheizung wird daher in einer weiteren Ausgestaltung der Erfindung gegenüber den Herdplatten bevorrechtigt behandelt. In einer bevorzugten Ausgestaltung wird dabei bei einem durch den zugeordneten Temperaturregelschalter eingeschalteten Heizelement der Backofenheizung die Zahl der gleichzeitig eingeschalteten Heizelemente für die Herdplatten um den Wert 1 reduziert. Dies bedeutet, daß beispielsweise bei einer 16 A-Absicherung des Spannungsnetzes neben der eingeschalteten Backofenheizung nur immer gleichzeitig eine Herdplatte eingeschaltet sein kann.

Die elektronische Steuereinrichtung ist zweckmäßigerweise als Mikrorechner ausgebildet oder enthält einen solchen. Weiterhin sind die Temperaturregelschalter in einer bevorzugten Ausführung als Bimetall-Regler ausgebildet.

Ein Ausführungsbeispiel der Erfindung ist in der Zeichnung dargestellt und in der nachfolgenden Beschreibung näher erläutert. Es zeigen:
- Fig. 1: ein Schaltbild eines Ausführungsbeispiels der erfindungsgemäßen Vorrichtung,
- Fig. 2: ein Signaldiagramm zur Erläuterung der Wirkungsweise herkömmlicher Herde und
- Fig. 3: ein Signaldiagramm zur Erläuterung der Wirkungsweise des Ausführungsbeispiels.

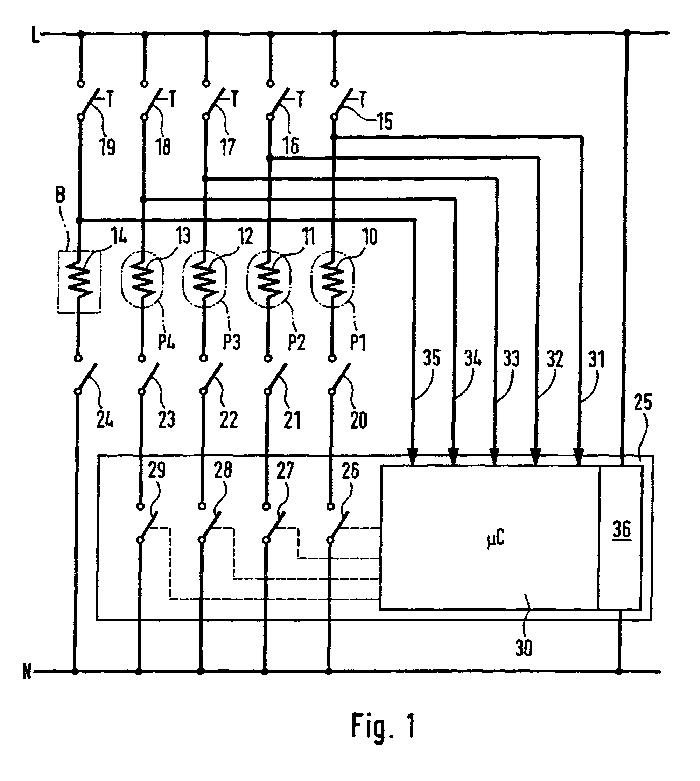

Gemäß dem in Fig. 1 dargestellten Schaltplan eines Herdes, beispielsweise eines Haushaltherdes, besitzt dieser Herd vier Herdplatten P1 - P4, die durch Heizelemente 10 - 13 beheizt werden. Weiterhin besitzt dieser Herd eine Backofenheizung B mit einem Heizelement 14. Zum Einstellen der gewünschten Aufheiztemperatur dienen in Reihe zu den Heizelementen 10 - 14 geschaltete Bimetall-Temperaturregler 15 - 19. Zum Ein- und Ausschalten der Heizelemente 10 - 14 dienen ebenfalls in Reihe dazu geschaltete Bedienungsschalter 20 - 24.

Während die Reihenschaltung aus den Bauelementen 19, 14 und 24 für die Backofenheizung B direkt an die Netzspannung angeschlossen ist, das heißt zwischen die Netz-leitungen L und N geschaltet ist, sind die übrigen entsprechenden Reihenschaltungen für die Herdplatten P1 - P4 über eine Leistungsbegrenzungseinrichtung 25 ebenfalls zwischen die Leitungen L und N geschaltet. In der Leistungsbegrenzungseinrichtung 25 sind die Verbindungsleitungen zwischen der Netzleitung N und den Reihenschaltungen für die einzelnen Herdplatten P1 - P4 nochmals durch Steuerschalter 26 - 29 getrennt bzw. trennbar, die beispielsweise als Relaisschalter, Triac oder Thyristoren ausgebildet sein können und die von einem Mikrorechner 30 gesteuert werden. Gegebenenfalls hierzu erforderliche ausgangsseitige Verstärkerstufen sind zur Vereinfachung nicht dargestellt. Fünf Eingänge des Mikrorechners 30 sind mit den jeweiligen Verknüpfungspunkten zwischen den Heizelementen 10 - 14 und den Bimetall-Temperaturreglern 15 - 19 verbunden, um das jeweils dort anliegende Potential abzugreifen, das als Information für den Schaltzustand der Bimetall-Temperaturregler 15 - 19 dient. Hierzu dienen Sensorleitungen 31 - 35.

Die beiden Netzspannungsleitungen L und N sind weiterhin an ein Netzteil 36 in der Leistungsbegrenzungseinrichtung 25 angeschlossen, das zu deren Stromversorung bzw. zur Stromversorgung des Mikrorechners 30 dient.

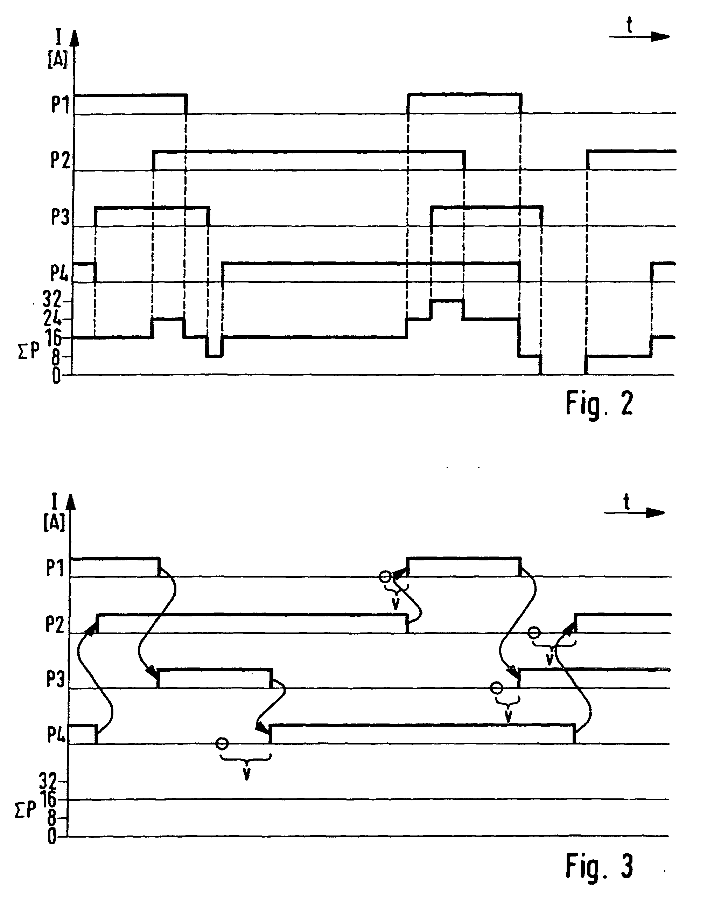

Zur Erläuterung der Wirkungsweise sei zunächst die Wirkungsweise eines herkömmlichen Herds anhand von Fig. 2 erläutert, bei dem die Leistungsbegrenzungseinrichtung 25 und die Sensorleitungen 31 - 35 nicht vorgesehen sind. Die Bedienungsschalter 20 - 24 sind gewöhnlich mit den Bimetall-Temperaturreglern 15 - 19 so gekoppelt, daß durch Drehen entsprechender Bedienungselemente zunächst die jeweilige Herdplatte bzw. Backofenheizung eingeschaltet und durch weiteres Drehen die gewünschte Temperatur bzw. Heizleistung eingestellt wird. Dies erfolgt durch entsprechende Beeinflussung der Bimetall-Temperaturregler 15 - 19. Die Einstellung der gewünschten Temperatur bzw. Heizleistung erfolgt durch Takten der Bimetall-Temperaturregler 15 - 19. Je größer der Leistungswunsch, um so größer das Einschaltverhältnis. In der Ein-Phase wird jeweils das entsprechende Heizelement erhitzt, und bei der einstellungsabhängigen Temperatur erfolgt die Abschaltung. Nach einer Abkühlzeit beginnt wieder die Ein-Phase. Dieses Takten der Heizelemente der Herdplatten P1 - P4 ist in Fig. 2 dargestellt, wo die jeweiligen Stromflußzeiten erkennbar sind. Die Länge der Einschaltzeiten sind ein Maß für die jeweiligen Leistungseinstellungen. So kann aus Fig. 2 entnommen werden, daß die Herdplatte P2 auf eine sehr hohe Heizleistung eingestellt ist, die Herdplatte P4 auf eine etwas geringere Heizleistung und die beiden übrigen Herdplatten P1 und P3 auf jeweils eine wesentlich niedrigere Heizleistung. Da das Takten der Bimetall-Temperaturregler 15 - 19 völlig unabhängig voneinander erfolgt, ergeben sich Zeitintervalle, in denen überhaupt kein Strom fließt, und andere Zeitintervalle, bei denen ein sehr hoher Strom fließt, da alle Bimetall-Temperaturregler eingeschaltet sind. Dies geht aus dem untersten Diagramm hervor, bei dem die Ströme durch alle Heizelemente aufsummiert sind. Beim Ausführungsbeispiel sei angenommen, daß durch jede Herdplatte im eingeschalteten Zustand ein Strom von 8 A fließt, so daß sich gemäß dem untersten Diagramm zeitweilig Ströme bis zu 32 Ampere ergeben können. Da in manchen Gebieten und insbesondere in alten Häusern und Wohnungen das Wechselspannungsnetz mit Sicherungen von lediglich 16 Ampere abgesichert sind, würde beim gleichzeitigen Betrieb von allen vier Herdplatten selbst bei geringer Leistungseinstellung des öfteren eine Abtrennung des Netzes durch die Sicherung erfolgen, was selbstverständlich unerwünscht ist. Selbst im Betrieb mit nur drei Herdplatten kann dies eintreten.

Durch die Leistungsbegrenzungseinrichtung 25 erfolgt eine Leistungsverteilung und Begrenzung derart, daß der Gesamtstrom immer auf den zulässigen Wert begrenzt wird, der im Ausführungsbeispiel 16 A beträgt. Hierzu werden zunächst vom Mikrorechner 30 die jeweiligen Schaltstellungen der Bimetall-Temperaturregler 15 - 19 erfaßt. Die Wirkungsweise wird zunächst unter Vernachlässigung der Backofenheizung B erläutert. Bei offenen Bedienungsschaltern 20 - 23 sind zunächst auch die Schalter der Bimetall-Temperaturregler 15 - 18 geöffnet. Wird nun einer der Bedienungsschalter geschlossen, beispielsweise der Bedienungsschalter 20, so schließt auch der Schalter des entsprechenden Bimetall-Temperaturreglers 15. Diesen Vorgang erfaßt der Mikrorechner 30 über die Sensorleitung 31 und steuert den Steuerschalter 26 in die geschlossene Schaltstellung. Beim Schließen des nächsten Bedienungsschalters wiederholt sich dieser Vorgang entsprechend. Eine Leistungsbegrenzung ist bei zwei tätigen Herdplatten noch nicht erforderlich. Wird nun ein dritter Bedienungsschalter geschlossen, beispielsweise der Bedienungsschalter 22, so prüft der Mikrorechner 30, ob beide Schalter der bereits tätigen Bimetall-Temperaturregler 15, 16 geschlossen sind. Ist dies der Fall, so hält der Mikrorechner den Steuerschalter 28 geöffnet, da sein Schließen eine Überschreitung der zulässigen Gesamtleistung bedeuten würde. Erst wenn sich einer der Schalter der Bimetall-Temperaturregler 16, 15 öffnet, beispielsweise der des Temperaturreglers 15, so öffnet der Mikrorechner den entsprechenden Steuerschalter 26 und schließt gleichzeitig den Steuerschalter 28, so daß nunmehr auch die Herdplatte P3 aufgeheizt werden kann. Der Vorgang läuft entsprechend beim Schließen des vierten Steuerschalters 29 ab, wie dies in Fig. 3 dargestellt ist. Durch den Mikrorechner 30 werden gleichzeitig immer nur zwei der Steuerschalter 26 - 29 geschlossen gehalten, so daß nur zwei der Herdplatten P1 - P4 gleichzeitig aufgeheizt werden können. Wenn nun der Schalter des Temperaturreglers einer dritten Herdplatte schließt, die Herdplatte also wieder aufheizen will, so verzögert der Mikrorechner 30 den Schließvorgang des entsprechenden Steuerschalters so lange, bis einer der beiden tätigen Temperaturregler durch Öffnen des entsprechenden Schalters abschaltet. Erst dann wird der Anforderung der dritten Herdplatte nachgekommen. Wenn bei zwei tätigen Temperaturreglern beide anderen Temperaturregler aufheizen wollen, so werden die entsprechenden Steuersignale im Mikrorechner 30 gespeichert, und bei Abschalten eines der tätigen Temperaturregler wird derjenige Temperaturregler eingeschaltet, dessen Anforderung am längsten zurückliegt. Die Einschaltaufforderungen der Temperaturregler der einzelnen Herdplatten P1 - P4 sind in Fig. 3 durch kleine Kreise dargestellt, die das Schließen des jeweiligen Schalters des zugehörigen Temperaturreglers darstellen. Die gekrümmten Pfeile stellen jeweils dar, daß durch das Ausschalten eines der Heizelemente ein anderes Heizelement durch Schließen des entsprechenden Steuerschalters eingeschaltet wird. Hierdurch ergibt sich ein konstanter Betriebsstrom von 16 Ampere, der niemals überschritten wird, jedoch selbstverständlich unterschritten werden kann, wenn eine geringere Zahl von Herdplatten eingeschaltet ist. Die Verzögerungszeiten V zwischen dem Einschalten von Temperaturreglern und dem tatsächlichen Einschalten des zugeordneten Heizelements durch verzögertes Einschalten des zugeordneten Steuerschalters sind so gering, daß sie bei der üblichen Arbeit in der Küche kaum bemerkt werden. Anheizzeiten und Kochzeiten verlängern sich nur unmerklich.

Wegen kritischer Backprozesse hat die Backofenheizung B in jedem Falle Vorrang. Dies zeigt sich in der Schaltung gemäß Fig. 1 dadurch, daß in der entsprechenden Reihenschaltung kein Steuerschalter vorgesehen ist. Während der Aufheizzeit des Heizelements 14 der Backofenheizung B wird durch den Mikrorechner 30 immer nur eine der Herdplatten P1 - P4 freigegeben, das heißt, in diesem Falle ist immer nur einer der Steuerschalter 26 - 29 geschlossen, und erst wenn der entsprechende Temperaturregler abschaltet, wird dieser Steuerschalter geöffnet und derjenige der übrigen Steuerschalter geschlossen, bei dem die Heizanforderung schon am längsten zurückliegt. Sobald bei eingeschalteter Backofenheizung der entsprechende Temperaturregler 19 abschaltet, werden vom Mikrorechner 30 wieder zwei der Steuerschalter 26 - 29 gleichzeitig geschlossen. Sobald jedoch der Temperaturregler 19 der Backofenheizung wieder einschaltet, wird einer der beiden geschlossenen Steuerschalter 26 - 29 zwangsweise geöffnet, beispielsweis derjenige, der schon am längsten geschlossen ist. Es ist selbstverständlich prinzipiell möglich, die Backofenheizung gleich zu behandeln wie die Heizungen für die Herdplatten P1 - P4.

Die Zahl der Herdplatten und die Zahl der Heizelemente für die Backofenheizung kann selbstverständlich variieren. Weiterhin ist es möglich, die Leistungsbegrenzungseinrichtung 25 bei einer höheren zulässigen Leistung so einzustellen, daß immer drei Steuerschalter gleichzeitig geschlossen sein dürfen bzw. zwei Steuerschalter bei gleichzeitig eingeschalteter Backofenheizung in der Aufheizphase.

Als Temperaturregelschalter für die Herdplatten P1 - P4 können anstelle von Bimetell-Temperaturreglern selbstverständlich auch andere Temperaturregler treten, beispielsweise sensorgesteuerte Schalter. Die Steuerschalter können dabei die Funktion dieser Schalter mitübernehmen, wobei dann die Sensorleitungen 31 - 35 mit den entsprechenden Temperatursensoren verbunden sind.

## Patentansprüche

1. Vorrichtung zur Begrenzung und Verteilung der von einem Herd aufgenommenen elektrischen Leistung, wobei jede Herdplatte und/oder Backofenheizung mit einem Temperaturregelschalter versehen ist, über den das zugeordnete Heizelement bei geschlossenem Bedienungsschalter mit einer Betriebsspannung beaufschlagbar, **dadurch gekennzeichnet, dass** eine elektronische Steuereinrichtung (30) mit Mitteln (31 - 35) zur Erfassung der Schaltstellungen der Temperaturregelschalter (15 - 19) sowie steuerseitig nochmals mit in Reihe zu den Heizelementen (10 - 13) wenigstens der Herdplatten (P1 - P4) und den Temperaturregelschaltern (15 - 19) geschalteten Steuerschaltern (26 - 29) verbunden ist, wobei durch die Steuerschalter (26 - 29) die Zahl der gleichzeitig eingeschalteten Heizelemente (10 - 14) so begrenzt ist, dass die maximal zulässige Gesamtleistung nicht überschritten wird.

2. Vorrichtung nach Anspruch 1, **dadurch gekennzeichnet, daß** durch die elektronische Steuereinrichtung (30) bei Erfassung des Öffnungsvorgangs eines Temperaturregelschalters (15 - 18) der zugeordnete Steuerschalter (26 - 29) ebenfalls geöffnet und ein anderer Steuerschalter, dessen zugeordneter Temperaturregelschalter geschlossen ist, ebenfalls geschlossen wird.

3. Vorrichtung nach Anspruch 2, **dadurch gekennzeichnet, daß** die elektronische Steuereinrichtung (30) eine Speichereinrichtung zum Speichern wenigstens der letzten Schließvorgänge der Temperaturregelschalter (15 - 18) besitzt und daß beim nächsten Steuersignal zum Schließen eines Steuerschalters (26 - 29) derjenige berücksichtigt wird, dessen zugeordneter Temperaturregelschalter am längsten geschlossen ist.

4. Vorrichtung nach einem der vorhergehenden Ansprüche, **dadurch gekennzeichnet, daß** die Steuerschalter (26 - 29) als Relais, Triacs oder Thyristoren ausgebildet sind.

5. Vorrichtung nach einem der vorhergehenden Ansprüche, **dadurch gekennzeichnet, daß** als Mittel (31 - 35) zur Erfassung der Schaltstellungen der Temperaturregelschalter (15 - 19) die elektrische Spannung an diesem Temperaturregelschalter (15 - 19) abgreifende Sensorleitungen vorgesehen sind.

6. Vorrichtung nach einem der vorhergehenden Ansprüche, **dadurch gekennzeichnet, daß** die wenigstens eine Backofenheizung (B) gegenüber den Herdplatten (P1 - P4) bevorrechtigt steuerbar ist.

7. Vorrichtung nach Anspruch 6, **dadurch gekennzeichnet, daß** bei einem durch den zugeordneten Temperaturregelschalter (19) eingeschalteten Heizelement (14) der Backofenheizung (B) die Zahl der gleichzeitig eingeschalteten Heizelemente (10 - 13) für die Herdplatten (P1 - P4) um den Wert 1 reduziert wird.

8. Vorrichtung nach einem der vorhergehenden Ansprüche, **dadurch gekennzeichnet, daß** die elektronische Steuereinrichtung (30) als Mikrorechner ausgebildet ist oder einen solchen enthält.

9. Vorrichtung nach einem der vorhergehenden Ansprüche, **dadurch gekennzeichnet, daß** die Temperaturregelschalter (15 - 19) als Bimetall-Temperaturregler ausgebildet sind.

## Claims

1. Device for limiting and distributing the power consumed by a cooker, whereby each hotplate and/or oven heater is provided with a temperature control switch by means of which an operating voltage can be applied to the associated heating element when the operating switch is closed, **characterised in that** an electronic control unit (30) is connected to means (31 - 35) for the detection of the switch positions of the temperature control switches (15 - 19) and, on the control side, to controllers (26 - 29) connected in series with the heating elements (10 - 13) of at least the hotplates (P1 - P4) and with the temperature control switches (15 - 19), whereby the number of simultaneously switched on heating elements (10 - 14) is so limited by the controllers (26 - 29) that the maximum permissible total power is not exceeded.

2. Device according to claim 1, **characterised in that** the electronic control unit (30) opens the associated controller (26 - 29) when the opening of a temperature control switch (15 - 18) is detected and closes another controller if the associated temperature control switch is closed.

3. Device according to claim 2, **characterised in that** the electronic control unit (30) incorporates a memory unit for the storage of at least the last closing actions of the temperature control switches (15 - 18), and **in that**, at the next control signal for closing a controller (26 - 29), the controller for the temperature control switch which has been closed for the longest time is taken into account.

4. Device according to any of the preceding claims, **characterised in that** the controllers (26 - 29) are designed as relays, triacs or thyristors.

5. Device according to any of the preceding claims, **characterised in that** sensor lines picking off the electrical voltage at the relevant temperature control switch (15 - 19) are provided as means (31 - 35) for the detection of the switch positions of the temperature control switches (15 - 19).

6. Device according to any of the preceding claims, **characterised in that** the at least one oven heater (B) has priority over the hotplates (P1 - P4) with regard to control.

7. Device according to claim 6, **characterised in that** the number of simultaneously switched on heating elements (10 - 13) for the hotplates (P1 - P4) is reduced by 1 if a heating element (14) of the oven heater (B) is switched on by the associated temperature control switch (19).

8. Device according to any of the preceding claims, **characterised in that** the electronic control unit (30) is designed as or incorporates a microcomputer.

9. Device according to any of the preceding claims, **characterised in that** the temperature control switches (15 - 19) are designed as bimetal thermostats.

## Revendications

1. Dispositif pour limiter et distribuer la puissance électrique consommée par une cuisinière, chaque plaque de cuisson et/ou chauffage du four étant muni d'un commutateur de régulation de température par l'intermédiaire duquel l'élément chauffant associé peut être exposé à une tension de service quand le commutateur de commande est fermé, **caractérisé en ce qu'**un dispositif de commande électronique (30) est relié à des moyens (31 - 35) pour détecter les positions de commutation des commutateurs de régulation de température (15 - 19) ainsi que, côté commande, également à des commutateurs de commande (26 - 29) montés en série avec les éléments chauffants (10 - 13) au moins des plaques de cuisson (P1 - P4) et avec les commutateurs de régulation de température (15 - 19), le nombre des éléments chauffants (10 - 14) simultanément sous tension étant limité par les commutateurs de commande (26 - 29) de telle manière que la puissance totale maximale admissible ne soit pas dépassée.

2. Dispositif selon la revendication 1, **caractérisé en ce que**, en cas de détection de l'opération d'ouverture d'un commutateur de régulation de température (15 - 18), le commutateur de commande (26 - 29) associé est également ouvert par le dispositif de commande électronique (30) et un autre commutateur de commande, dont le commutateur de régulation de température associé est fermé, est également fermé.

3. Dispositif selon la revendication 2, **caractérisé en ce que** le dispositif de commande électronique (30) possède un dispositif d'enregistrement pour enregistrer au moins les dernières opérations de fermeture du commutateur de régulation de température ( 15 - 18) et **en ce qu'**au prochain signal de commande en vue de la fermeture d'un commutateur de commande (26 - 29), on prend celui dont le commutateur de régulation de température associé est fermé depuis le plus longtemps.

4. Dispositif selon l'une des revendications précédentes, **caractérisé en ce que** les commutateurs de commande (26 - 29) sont conformés en relais, triacs ou thyristors.

5. Dispositif selon l'une des revendications précédentes, **caractérisé en ce que**, comme moyen (31 - 35) pour détecter les positions de commutation des commutateurs de régulation de température (15 - 19), sont prévues des lignes de capteurs prenant la tension électrique sur ce commutateur de régulation de température (15 - 19).

6. Dispositif selon l'une des revendications précédentes, **caractérisé en ce que** le chauffage de four (8) au nombre d'au moins un peut être commandé de manière prioritaire par rapport aux plaques de cuisson (P1 - P4).

7. Dispositif selon la revendication 6, **caractérisé en ce que**, quand un élément chauffant (14) du chauffage de four (8) est mis en marche par le commutateur de régulation de température (19) associé, le nombre des éléments chauffants (10 - 13) des plaques de cuisson (P1 - P4) simultanément en marche est réduit de la valeur 1.

8. Dispositif selon l'une des revendications précédentes, **caractérisé en ce que** le dispositif de commande électronique (30) est conformé en micro-calculateur ou en contient un.

9. Dispositif selon l'une des revendications précédentes, **caractérisé en ce que** les commutateurs de régulation de température (15 - 19) sont conformés en régulateurs de température bimétal.
